# EUROPÄISCHE PATENTSCHRIFT

(11) **EP 2 505 389 B1**
(45) Veröffentlichungstag und Bekanntmachung des Hinweises auf die Patenterteilung: **29.04.2015**
(21) Anmeldenummer: 12153973.8
(22) Anmeldetag: 06.02.2012
(51) Int. Cl.: B60C 11/04, B60C 11/12

(54) **Fahrzeugluftreifen**
Pneumatic tyres for a vehicle
Pneus de véhicule

(30) Priorität: 29.03.2011 DE 102011001634
(43) Veröffentlichungstag der Anmeldung: 03.10.2012
(73) Patentinhaber: Continental Reifen Deutschland GmbH, 30165 Hannover (DE)
(72) Erfinder: Rittweger, Stefan, 30163 Hannover (DE); Volk, Heiner, 31535 Neustadt (DE)
(74) Vertreter: Finger, Karsten

(56) Entgegenhaltungen:
- EP-A2- 0 178 859
- EP-A2- 1 864 830
- WO-A1-2011/131381
- GB-A- 2 160 829
- US-A- 3 550 665
- US-A- 4 449 560
- US-A- 5 109 901

## Beschreibung

Die Erfindung betrifft einen Fahrzeugluftreifen mit einem Laufstreifen mit in Umfangsrichtung umlaufenden und von Quernuten freien Profilbändern, welche anstelle von Quernuten parallel zueinander und im Wesentlichen in Laufstreifenquerrichtung verlaufende Einschnitte mit einer Breite von 0,4 mm bis 0,8 mm aufweisen, wobei Einschnitte vorgesehen sind, deren Normalabstand 5 mm bis 10 mm beträgt.

Es ist üblich, Fahrzeugluftreifen mit profilierten Laufstreifen zu versehen, die sich ausschließlich aus Profilblockreihen oder Profilbändern zusammensetzen oder die eine Kombination von Profilblockreihen mit Profilbändem aufweisen. Unter Profilband wird ein in Umfangsrichtung umlaufender, meist durch Umfangsnuten begrenzter Abschnitt im Laufstreifen verstanden, welcher keine ihn durchquerenden Quernuten aufweist. Sowohl Profilbänder als auch Profilblockreihen können, je nach Einsatzweck des Reifens, mit Einschnitten, die üblicherweise eine Breite von 0,4 mm bis 0,8 mm aufweisen, versehen sein. Querrillen und Einschnitte haben hauptsächlich die Aufgaben, eine Entwässerung des Profils zu unterstützen, um Aquaplaning zu verhindern sowie die Traktion des Reifens auf nassem und trockenem Untergrund sicherzustellen und den Rollwiderstand zu senken.

Ein Fahrzeugluftreifen der eingangs genannten Art ist beispielsweise aus der US 5,109,901 A bekannt. Dieser Fahrzeugluftreifen weist im Laufstreifen Profilbänder auf, die keine Quernuten enthalten, jedoch mit einer Vielzahl von parallel zueinander und im Wesentlichen in Laufstreifenquerrichtung verlaufenden Einschnitten versehen sind. Der gegenseitige Abstand der Einschnitte ist für sämtliche Einschnitte gleich groß und beträgt zwischen 3 mm und 20 mm. Die EP 1 864 830 A2 offenbart einen Fahrzeugluftreifen mit einem Laufstreifen mit Profilbändern, die voneinander durch in Umfangsrichtung gerade umlaufende Umfangsnuten getrennt sind. Von den Umfangsnuten ragen sehr kurze, untereinander gleich beabstandete Einschnitte in die Profilbänder hinein. Eine analoge Maßnahme ist in Profilbändern des Laufstreifens getroffen, welcher aus der US 4,459,560 A bekannt ist. Die GB 2 160 829 A offenbart einen Fahrzeugluftreifen mit einem Laufstreifen mit einer Anzahl von Profilbändern, in welchen ebenfalls zueinander parallel verlaufende Einschnitte ausgebildet sind. Der gegenseitige Abstand der Einschnitte wird gemäß einem Verfahren der Pitchlängenvariation geändert, sodass es Einschnitte in Profilbändern gibt, die einen geringeren und andere Einschnitte, die einen größeren gegenseitigen Abstand aufweisen.

Aus der EP 0 540 340 A2 ist ein Fahrzeugluftreifen bekannt, dessen Laufstreifen sich aus einer Anzahl von Profilblockreihen zusammensetzt. Die Blöcke in den Profilblockreihen sind voneinander durch Querrillen getrennt und weisen jeweils paarweise in Laufstreifenquerrichtung verlaufende Einschnitte auf, welche an ihren radial inneren Enden lokal verbreitert sind, um beim Entformen des Reifens nach der Vulkanisation das Entstehen von Einrissen am Boden der Einschnitte zu verhindern. Aus der EP 1 920 951 A1 ist ebenfalls ein Reifen bekannt, welcher ein Laufstreifenprofil mit Blockreihen aufweist. Die Blöcke sind jeweils mit zwei Paaren von in Laufstreifenquerrichtung verlaufenden Einschnitten versehen, um die Griffeigenschaften zu verbessern.

Wie bereits erwähnt sind die Querrillen in Laufstreifen von Reifen vor allem für gute Nässeeigenschaften und einen geringen Rollwiderstand von Bedeutung, stellen jedoch eine deutlich wahrnehmbare Geräuschquelle im Abrollgeräusch des Reifens dar.

Der Erfindung liegt nun die Aufgabe zugrunde, bei einem Reifen der eingangs genannten Art das Abrollgeräusch zu verbessern bzw. zu verringern, aber gute Nässeeigenschaften zu erhalten und beim Abrollen eine derartige Verformung des Laufstreifens zu ermöglichen, dass ein geringer Rollwiderstand gewährleistet ist.

Gelöst wird die gestellte Aufgabe erfindungsgemäß dadurch, dass die Einschnitte, deren Normalabstand 5 mm bis 10 mm beträgt, in Einschnittpaaren angeordnet sind, wobei der gegenseitige Abstand der Einschnittpaare, an den Enden der Einschnitte als Abstand der einander zugewandten Einschnitte der beiden Einschnittpaare ermittelt, zwischen 25 mm und 35 mm beträgt.

Ein gemäß der Erfindung ausgeführter Fahrzeugluftreifen weist daher ein Laufstreifenprofil mit Profilbändern auf, welche mit paarweise angeordneten Einschnitten versehen sind, deren Anordnung an die Anordnung von üblichen Quernuten in Profilblockreihen angeglichen ist. Die "Profilmechanik" entspricht daher im Wesentlichen jener eines herkömmlichen Laufstreifenprofils mit Quernuten. Dadurch entsprechen vor allem die Trockenfahreigenschaften erfindungsgemäßer Laufstreifen zumindest jenen eines herkömmlich gestalteten Laufstreifens. Der Ersatz der Quernuten durch Einschnittpaare bewirkt eine Aufteilung der beim Abrollen stattfindenden Biegebewegung in Umfangsrichtung von einer Gelenksstelle, wie es bei einer Quernut der Fall ist, auf zwei Gelenksstellen. Für das Geräusch bedeutet dies eine Verschiebung der Anregungsfrequenz hin zu höheren Frequenzen. Mit einem Reifen mit beispielsweise 70 Quernuten am Reifenumfang ergibt sich bei einer Fahrgeschwindigkeit von 80km/h eine Anregungsfrequenz in der Größenordnung von 800 Hz. Der Ersatz der Quernuten durch Einschnittpaare reduziert die Anregung bei 800 Hz und erzeugt eine zusätzliche Anregung, die deutlich oberhalb von 800 Hz liegt. Da Frequenzen über 1000 Hz bei PKW-Fahrzeugluftreifen schlecht abgestrahlt werden, schlechter als Frequenzen unter 1000 Hz, ist ein Fahrzeugluftreifen mit erfindungsgemäß ausgeführten Profilbändern anstelle von Profilblockreihen deutlich leiser.

Profilbänder, die weitgehend nur durch Einschnitte strukturiert sind, erzeugen femer einen wesentlich geringeren Kontaktdruck als Profilblockreihen, wodurch das Gummimaterial im Laufstreifen geringer komprimiert wird. Der gegenseitige Abstützeffekt der Einschnittwände kommt der Verringerung der Kompression noch entgegen. Diese Effekte sind besonders positiv für einen geringeren Rollwiderstand. Das Gummimaterial zwischen den paarweise angeordneten Einschnitten stabilisiert den Laufstreifen, wenn dieser über die Reifenbreite Knick- und Biegebeanspruchungen ausgesetzt wird. Diese Stabilisierung bietet Vorteile beim Laufstreifenabrieb und bei den Trockenfahreigenschaften.

Bei einer bevorzugten Ausführungsform der Erfindung sind die paarweise angeordneten Einschnitte im Profilband in zwei Einschnittreihen angeordnet, die vorzugsweise in Umfangsrichtung gegeneinander versetzt sind. Mit derart angeordneten Einschnittpaaren kann gezielt Einfluss auf den Kontaktdruck sowie die Stabilität des Profilbandes genommen werden. Eine alternative Ausführungsvariante, bei der die paarweise angeordneten Einschnitte das Profilband durchqueren, gestattet ebenfalls eine entsprechende Einflussnahme.

Bei Ausführungsformen, bei welchen die Einschnittpaare in zwei Einschnittreihen im Profilband angeordnet sind, kann vorgesehen sein, jeweils zwei in Umfangsrichtung benachbarte Einschnittpaare durch Verbindungsrillen miteinander zu verbinden, welche gleich breit wie die Einschnitte ausgeführt sind, jedoch eine geringere Tiefe aufweisen, als die Einschnitte, insbesondere beträgt ihre Tiefe einige Zehntelmillimeter bis zu 1 mm. Derartig ausgeführte Verbindungsrillen unterstützen bei neuem Reifen die Entwässerung, haben jedoch auch eine Dekorwirkung. Diese Verbindungsrillen können auch in Umfangsrichtung verlaufen.

Für das Abrollgeräusch des Reifens ist es ferner von Vorteil, wenn die paarweise angeordneten Einschnitte bzw. ihre Abschnitte unter einem spitzen Winkel von *3*° bis *10*° zur Laufstreifenquerrichtung verlaufen.

Durch die Erfindung wird eine Verteilung der Spreizung des Gummimaterials beim Abrollen des Reifens auf die beiden Einschnitte bewirkt, was eine geringere Kerbwirkung und einen geringeren Rollwiderstand zu Folge hat. Es ist daher vorteilhaft, wenn die paarweise angeordneten Einschnitte eine gewisse Mindesttiefe aufweisen. Ihre Tiefe sollte entweder der Profiltiefe entsprechen oder um bis zu 5 mm, insbesondere um bis zu 3 mm, geringer sein als die Profiltiefe.

Bei einer weiteren, vorteilhaften Ausführungsform der Erfindung ist das Profilband zwischen paarweise angeordneten Einschnitten zumindest einseitig jeweils mit Einbuchtungen oder Taschen versehen. Auf diese Weise ist die Profilelementbrücke zwischen den paarweise angeordneten Einschnitten gegenüber der an dieser Stelle vorliegenden Profilbandbreite in Querrichtung etwas verkürzt. Durch die Taschen werden an den Profilbändern in Querrichtung Kantenabschnitte zur Verfügung gestellt, welche die Traktion des Reifens, beispielsweise in Schneematsch oder Schnee, unterstützen. Die Taschen reichen in einem Ausmaß von 1 mm bis 3 mm in das Profilband hinein und erstrecken sich in radialer Richtung höchstens bis auf die Profiltiefe bzw. die Tiefe der das jeweilige Profilband begrenzende(n) Umfangsnut bzw. Umfangsnuten.

Weitere Merkmale, Vorteile und Einzelheiten der Erfindung werden nun anhand der Zeichnung, die schematisch einige Ausführungsbeispiele darstellt, näher beschrieben. Dabei zeigen
Fig.1 bis Fig. 5 Draufsichten auf in Umfangsrichtung umlaufende Laufstreifenprofilbänder mit unterschiedlichen Ausführungsvarianten der Erfindung,
Fig. 1a bis Fig. 5a Schnittdarstellungen der Profilbänder aus Fig. 1 bis Fig. 5, jeweils entlang der Linien S-S,
Fig. 1b einen Schnitt entlang der Linie Ib-Ib der Fig. 1 und
Fig. 6 eine Teilabwicklung eines Laufstreifenprofils mit gemäß der Erfindung ausgeführten Profilbändem.

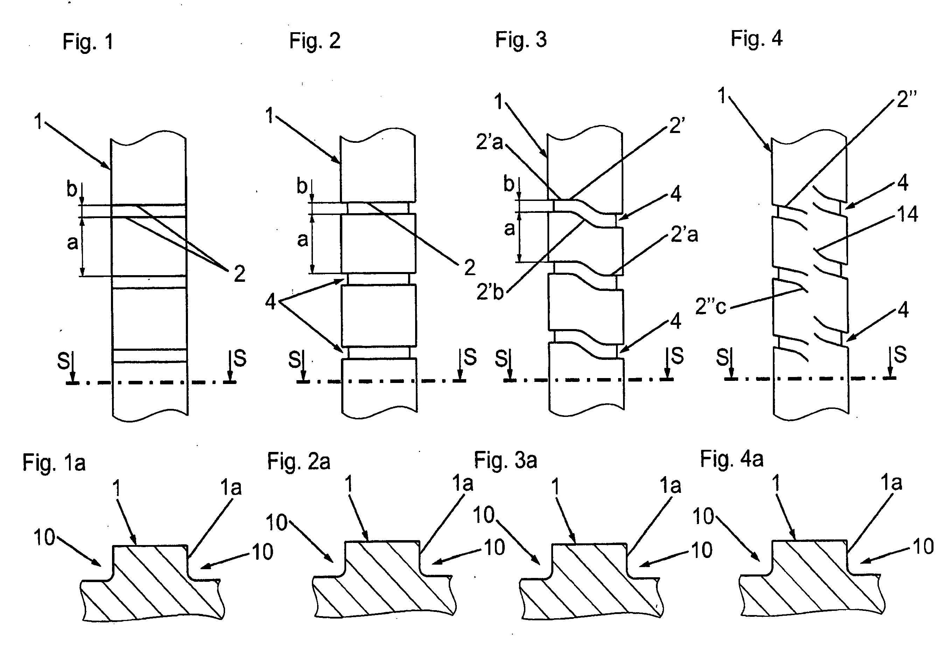

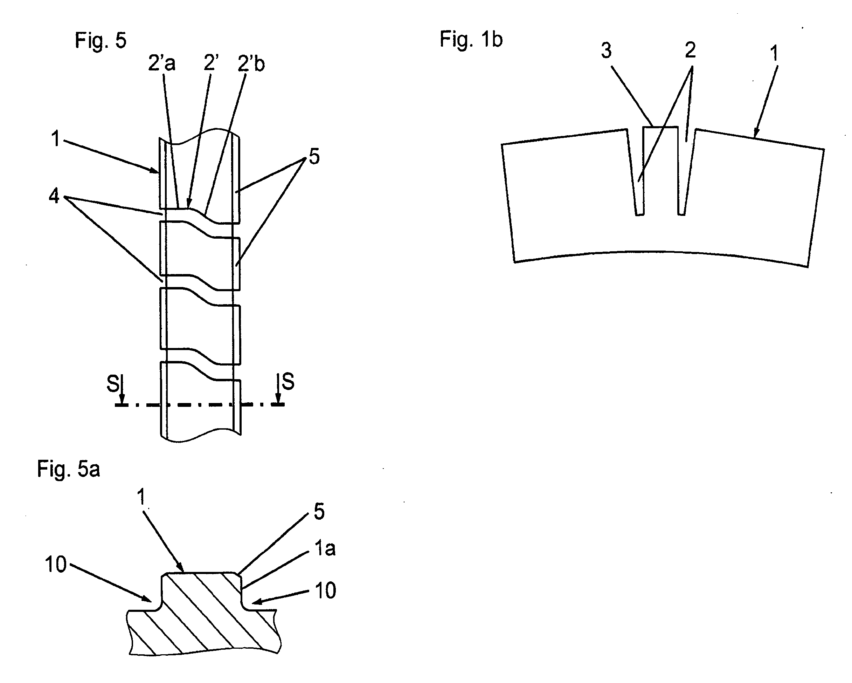

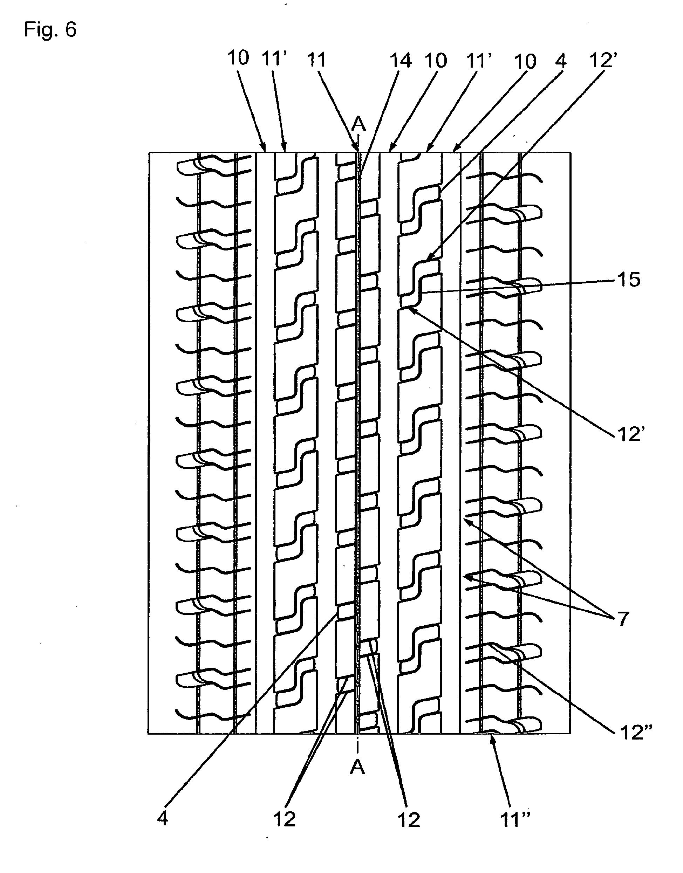

Fig. 1 bis Fig. 5 zeigen unterschiedliche Ausführungsvarianten von Profilbändern 1 für einen Laufstreifen für einen Fahrzeugluftreifen in Radialbauart, insbesondere für Personenkraftwagen, Vans und dergleichen. Erfindungsgemäß ausgeführte Fahrzeugluftreifen weisen Laufstreifen auf, die zumindest ein erfindungsgemäß ausgeführtes Profilband umfassen, insbesondere jedoch überwiegend oder ausschließlich aus erfindungsgemäß ausgeführten Profilbändem bestehen. Laufstreifen mit erfindungsgemäß gestalteten Profilbändern können jedoch auch anders ausgeführte Profilbänder oder auch Profilblockreihen aufweisen. Bei einer bevorzugten Ausführungsform der Erfindung weist der Laufstreifen zwischen drei und fünf erfindungsgemäß ausgeführte Profilbänder auf. Fig. 6 zeigt eine bevorzugte Ausführungsform der Erfindung mit fünf Profilbändern.

Die Figuren 1 bis 5 zeigen Ausführungsvarianten von Profilbändern 1, welche in Umfangsrichtung beidseitig Profilbandflanken 1a aufweisen, welche Umfangsnuten 10 begrenzen. Die Umfangsnuten 10 sind als gerade verlaufende Nuten dargestellt, können jedoch in Umfangsrichtung auch in Wellenform oder Zickzackform verlaufen, je nach dem Verlauf der Profilbandflanken 1a.

Ein wesentliches Merkmal der Erfindung ist die Strukturierung der Profilbänder 1 mit paarweise und parallel zueinander angeordneten Einschnitten 2, 2', 2". Der gegenseitige Abstand a der Einschnittpaare, welcher bei den Enden der Einschnitte 2, 2', 2" an einer Profilbandflanke 1a und zwischen den beiden einander zugewandten Einschnitten 2, 2', 2" von zwei in Umfangsrichtung aneinander anschließenden Einschnittpaaren 2, 2', 2" ermittelt wird, beträgt zwischen 25 mm und 35 mm und entspricht daher der üblichen Umfangserstreckung von Profilblöcken in Profilblockreihen.

Der gegenseitige Normalabstand b der paarweise angeordneten Einschnitte 2, 2', 2" entspricht im Wesentlichen der Breite der Profilelementbrücke 3 zwischen den Einschnitten 2, 2', 2" und beträgt zwischen 5 mm und 10 mm. Der Abstand b entspricht somit der üblichen Breite von Quemuten in Profilblockreihen. Über die Erstreckung bzw. den Verlauf der paarweise angeordneten Einschnitte 2, 2', 2" bleibt der Abstand b weitgehend konstant. Die Einschnitte 2, 2', 2" selbst weisen eine Breite in der Größenordnung von 0,4 mm bis 0,8 mm, insbesondere etwa 0,6 mm, auf. Die Tiefe der Einschnitte 2, 2', 2" entspricht der vorgesehenen Profiltiefe, die üblicherweise 8 mm beträgt, oder ist um bis zu 5 mm, insbesondere bis zu 3 mm, geringer als die Profiltiefe.

Bei der in Fig. 1 gezeigten Ausführungsform verlaufen die paarweise angeordneten Einschnitte 2 gerade in Laufstreifenquerrichtung und durchqueren das Profilband 1. Bei der in Fig. 2 gezeigten Ausführungsvariante entspricht der Verlauf der Einschnitte 2 jenem der in Fig. 1 gezeigten Ausführungsform. Das Profilband 1 ist jedoch an den Profilbandflanken 1a zwischen den paarweise angeordneten Einschnitten 2 mit Einbuchtungen bzw. Taschen 4 versehen, sodass die Erstreckung der Profilelementbrücken 3 in Laufstreifenquerrichtung geringer ist als die Breite des Profilbandes 1 an dieser Stelle. Die Taschen 4 reichen zwischen 1 mm und 3 mm in das Profilband 1 hinein und erstrecken sich in radialer Richtung höchstens bis auf die Profiltiefe bzw. die Tiefe der Umfangsnuten 10.

Fig. 3 zeigt eine Ausführungsvariante, bei der die paarweise angeordneten Einschnitte 2' den Profilbandflanken 1a benachbart vorerst jeweils in Laufstreifenquerrichtung verlaufende Einschnittabschnitte 2'a aufweisen, welche über Einschnittabschnitte 2'b, die unter einem spitzen Winkel zur Laufstreifenquerrichtung verlaufen, miteinander verbunden sind und derart in Umfangsrichtung gegeneinander versetzt sind. Die Übergangsbereiche zwischen den einzelnen Einschnittabschnitten 2'a und 2'b sind gerundet ausgeführt. Die Einschnittabschnitte 2'b - mit oder ohne die anschließenden gerundeten Übergänge - können eine Tiefe aufweisen, die entweder der Tiefe der Einschnittabschnitte 2'a entspricht oder etwas, insbesondere um bis zu 2 mm, geringer ist. Anstelle der Einschnittabschnitte 2'b können sehr seichte Verbindungsrillen mit einer Tiefe von wenigen Zehntelmillimetern bis zu 1 mm vorgesehen sein, die lediglich eine dekorierende Funktion haben. Bei der in Fig. 3 gezeigten Ausführungsvariante sind ferner analog zur Ausführungsform gemäß Fig. 2 Taschen 4 vorgesehen.

Bei der in Fig. 4 gezeigten Ausführungsvariante sind im Profilband 1 zwei in Umfangsrichtung versetzte "Reihen" von paarweise angeordneten Einschnitten 2" vorgesehen. Die paarweise angeordneten Einschnitte 2" enden in der Profilbandmitte und verlaufen gegenüber der Laufstreifenquerrichtung unter einem spitzen Winkel, welcher 45° nicht übersteigt. Die Einschnitte 2" weisen an ihren Enden abgebogene kurze Abschnitte 2"c auf, die vorzugsweise sehr seicht ausgeführt sind und insbesondere eine Tiefe von einigen Zehntelmillimetern bis zu 1 mm aufweisen. Auch bei der in Fig. 4 gezeigten Ausführungsvariante sind Taschen 4 vorgesehen.

Fig. 5 zeigt eine Ausführungsform, die eine Variante der in Fig. 3 gezeigten Ausführungsform ist. Die paarweise angeordneten Einschnitte 2' weisen daher Einschnittabschnitte 2'a und 2'b auf. Zusätzlich sind die Profilbandflanken 1a, wie es Fig. 5a zeigt, unmittelbar an der Profiloberfläche in bekannter Weise angefast, sodass sie kurze Schrägflächen 5 aufweisen.

Wie bereits erwähnt ersetzen die paarweise angeordneten Einschnitte 2, 2', 2" die üblicherweise in Profilblockreihen zwischen den Profilblöcken vorgesehenen Quernuten. Die paarweise angeordneten Einschnitte 2, 2', 2" bewirken quasi eine Aufteilung der Biegebewegungen des Laufstreifens in Umfangsrichtung während des Abrollens des Reifens von einer "Gelenkstelle" - bei Quernuten - auf zwei "Gelenkstellen". Für das Abrollgeräusch bedeutet dies eine Verschiebung der Anregungsfrequenz hin zu höheren Frequenzen. So ist beispielsweise bei einem Reifen mit einem Laufstreifen mit einem Blockprofil mit etwa 70 Querrillen über den Reifenumfang bei einer Fahrgeschwindigkeit von 80 km/h die Anregungsfrequenz in der Größenordnung von 800 Hz. Werden Blockreihen im Laufstreifen durch Profilbänder mit Einschnittpaaren ersetzt, wird die Anregung bei 800 Hz reduziert und eine zusätzliche Anregung in einem Frequenzbereich deutlich oberhalb von 800 Hz erzeugt. Da Frequenzen oberhalb von 1000 Hz bei PKW-Fahrzeugluftreifen meist schlecht abgestrahlt werden, ist ein Fahrzeugluftreifen, welcher gemäß der Erfindung ausgeführt ist, deutlich leiser als ein Reifen mit einem Blockprofil mit Quernuten. Fig. 1b zeigt schematisch die Verformung eines Einschnittpaares während des Abrollens des Reifens kurz vor dem Eintritt in den oder kurz nach dem Austritt aus dem Latsch. Wie Fig. 1b zeigt, verteilt sich die Spreizung des Gummimaterials auf die beiden Einschnitte 2, was beim Abrollen des Reifens eine geringere Kerbwirkung und einen geringeren Rollwiderstand zur Folge hat, da sich durch das bereits erwähnte "Doppelgelenk" das Gummimaterial weniger verformt als dies bei Reifen mit breiten Quernuten im Laufstreifen der Fall ist.

Fig. 6 zeigt eine Teilabwicklung einer Ausführungsvariante eines gemäß der Erfindung ausgeführten profilierten Laufstreifens. Der gezeigte Laufstreifen weist fünf in Umfangsrichtung umlaufende Profilbänder 11, 11' und 11" auf. Entlang des Reifenäquators, welcher durch die Linie A-A angedeutet ist, verläuft das Laufstreifenband 11, welches mit zwei Reihen von paarweise angeordneten Einschnitten 12, die in Umfangsrichtung gegeneinander versetzt sind, versehen ist. Die Ausführung der Einschnittpaare mit Taschen 4 ist im Wesentlichen analog zu Fig. 4 mit dem Unterschied, dass die Einschnitte 12 keine seichten Endabschnitte aufweisen. Die Einschnitte 12 verlaufen sämtlich parallel zueinander und sind gegenüber der Laufstreifenquerrichtung unter einem kleinen spitzen Winkel in der Größenordnung von 3° bis 10 °geneigt. Eine schmale (ca. 1 mm breite), seichte (ca. 1 mm tiefe) Dekorrille 14' verläuft in Umfangsrichtung und mittig durch das Profilband 11. Das Profilband 11 ist durch zwei breite, in Umfangsrichtung gerade umlaufende Umfangsnuten 10 von den Profilbändern 11' getrennt, die ihrerseits durch weitere, gerade und in Umfangsrichtung umlaufende Umfangsnuten 10 von den schulterseitigen Profilbändern 11" getrennt sind. In den Profilbändern 11' sind paarweise angeordnete Einschnitte 12' angeordnet, die vom Konzept her der in Fig. 4 gezeigten Ausführungsform entsprechen. Die Einschnitte 12' bilden zwei Reihen von in Umfangsrichtung gegeneinander versetzten Einschnittpaaren gemäß der Erfindung. Verbindungsrillen 15, deren Breite der Einschnittbreite entspricht und die eine sehr geringe Tiefe von einigen Zehntelmillimetern bis 1 mm aufweisen sowie in Umfangsrichtung verlaufen, verbinden die Einschnitte 12'. Auch in den Profilbändern 11' befinden sich an den Profilbandflanken zwischen den paarweise zusammengehörenden Einschnitten 12' die beschriebenen Taschen 4.

In den schulterseitigen Profilbändern 11" befinden sich paarweise angeordnete Einschnitte 12" mit einem Einschnittkonzept, welches im Wesentlichen der in Fig. 3 gezeigten grundsätzlichen Ausführungsform entspricht. Die paarweise angeordneten Einschnitte 12" münden bei dieser Ausführungsvariante jedoch nicht in die Umfangsnut 10, es verbleibt jeweils zwischen den Einschnittenden und der Umfangsnut 10 ein schmaler Steg 7, wodurch das Abrollgeräusch günstig beeinflusst wird.

Die gemäß der Erfindung im Laufstreifen vorgesehenen und Quernuten ersetzenden Einschnitte 2, 2', 2", 12, 12', 12" werden ferner grundsätzlich derart angeordnet, dass sie zur Laufstreifenquerrichtung unter einem Winkel von höchstens 45° verlaufen.

### Bezugsziffernliste

- 1: Profilband
- 1a: Profilbandflanken
- 2, 2', 2": Einschnitt
- 2'a, 2'b: Einschnittabschnitt
- 2"c: Abschnitt
- 3: Profilelementbrücke
- 4: Tasche
- 5: Schrägfläche
- 7: Steg
- 10: Umfangsnut
- 11, 11', 11": Profilband
- 12, 12', 12": Einschnitt
- 14, 14': Dekorrille
- 15: Verbindungsrille
- A-A: Reifenäquator
- a: Abstand
- b: Abstand

## Patentansprüche

1. Fahrzeugluftreifen mit einem Laufstreifen mit in Umfangsrichtung umlaufenden und von Quernuten freien Profilbändern (1, 11, 11', 11"), welche anstelle von Quernuten parallel zueinander und im Wesentlichen in Laufstreifenquerrichtung verlaufende Einschnitte (2, 2', 2", 12, 12', 12") mit einer Breite von 0,4 mm bis 0,8 mm aufweisen, wobei Einschnitte ((2, 2', 2", 12, 12', 12") vorgesehen sind, deren Normalabstand 5 mm bis 10 mm beträgt,
**dadurch gekennzeichnet,**
**dass** die Einschnitte (2, 2', 2", 12, 12', 12"), deren Normalabstand 5 mm bis 10 mm beträgt, in Einschnittpaaren angeordnet sind, wobei der gegenseitige Abstand (a) der Einschnittpaare, an den Enden der Einschnitte (2, 2', 2", 12, 12', 12") als Abstand der einander zugewandten Einschnitte (2, 2', 2", 12, 12', 12") der beiden Einschnittpaare ermittelt, zwischen 25 mm und 35 mm beträgt.

2. Fahrzeugluftreifen nach Anspruch 1, **dadurch gekennzeichnet, dass** die paarweise angeordneten Einschnitte (2", 12') im Profilband (1, 11') in zwei Einschnittreihen angeordnet sind, die vorzugsweise in Umfangsrichtung gegeneinander versetzt sind.

3. Fahrzeugluftreifen nach Anspruch 2, **dadurch gekennzeichnet, dass** jeweils zwei in Umfangsrichtung benachbarte Einschnittpaare aus den beiden Einschnittreihen miteinander durch Verbindungsrillen (15) verbunden sind, welche gleich breit wie die Einschnitte (12') ausgeführt sind und eine geringere Tiefe aufweisen als die Einschnitte (12').

4. Fahrzeugluftreifen nach Anspruch 3, **dadurch gekennzeichnet, dass** die Verbindungsrillen (15) eine Tiefe von einigen Zehntelmillimetern bis zu 1 mm aufweisen.

5. Fahrzeugluftreifen nach Anspruch 1, **dadurch gekennzeichnet, dass** die paarweise angeordneten Einschnitte (2, 2') das Profilband (1) durchqueren.

6. Fahrzeugluftreifen nach Anspruch 1 oder 5, **dadurch gekennzeichnet, dass** die paarweise angeordneten Einschnitte (2'), den Profilbandflanken (1a) benachbart, Einschnittabschnitte (2'a) aufweisen, die in Umfangsrichtung gegeneinander versetzt sind und über mittige Einschnittabschnitte (2'b) verbunden sind, die unter einem größeren spitzen Winkel zur Laufstreifenquerrichtung verlaufen als die Einschnittabschnitte (2'a) an den Profilbandflanken (1a).

7. Fahrzeugluftreifen nach Anspruch 6, **dadurch gekennzeichnet, dass** die mittigen Einschnittabschnitte (2'b) eine Tiefe aufweisen, die der Tiefe der an sie anschließenden Einschnittabschnitte (2'a) entspricht oder um bis zu 2 mm geringer ist als die Tiefe der an sie anschließenden Einschnittabschnitte (2'a).

8. Fahrzeugluftreifen nach einem der Ansprüche 1 bis 7, **dadurch gekennzeichnet, dass** die paarweise angeordneten Einschnitte (2, 2', 2", 12, 12', 12") unter einem spitzen Winkel von bis zu 45° zur Laufstreifenquerrichtung verlaufen.

9. Fahrzeugluftreifen nach einem der Ansprüche 1 bis 8, **dadurch gekennzeichnet, dass** die paarweise angeordneten Einschnitte (2, 2', 2", 12, 12', 12") eine Tiefe aufweisen, die der Profiltiefe entspricht oder bis zu 5 mm, insbesondere bis zu 3 mm, geringer ist als die Profiltiefe.

10. Fahrzeugluftreifen nach einem der Ansprüche 1 bis 9, **dadurch gekennzeichnet, dass** das Profilband (1) zwischen paarweise angeordneten Einschnitten (2, 2', 2", 12, 12', 12") zumindest einseitig mit Einbuchtungen oder Taschen (4) versehen ist.

11. Fahrzeugluftreifen nach Anspruch 10, **dadurch gekennzeichnet, dass** die Taschen (4) zwischen 1 mm und 3 mm in das Profilband (1, 11, 11') hineinragen und sich in radialer Richtung höchstens bis auf die Profiltiefe erstrecken.

## Claims

1. Pneumatic vehicle tyre with a tread rubber with profile strips (1, 11, 11', 11"), which run around in the circumferential direction and are free from transverse grooves and, instead of transverse grooves, have sipes (2, 2', 2", 12, 12', 12") with a width of 0.4 mm to 0.8 mm that run parallel to one another and substantially in the transverse direction of the tread rubber, wherein sipes (2, 2', 2", 12, 12', 12") that have a normal spacing of 5 mm to 10 mm are provided,
**characterized**
**in that** the sipes (2, 2', 2", 12, 12', 12") that have a normal spacing of 5 mm to 10 mm are arranged in pairs of sipes, the mutual distance (a) between the pairs of sipes, determined at the ends of the sipes (2, 2', 2", 12, 12', 12") as the distance between the sipes (2, 2', 2", 12, 12', 12") facing one another of the two pairs of sipes, being between 25 mm and 35 mm.

2. Pneumatic vehicle tyre according to Claim 1, **characterized in that** the sipes (2", 12') arranged in pairs are arranged in the profile strip (1, 11') in two rows of sipes that are preferably offset from one another in the circumferential direction.

3. Pneumatic vehicle tyre according to Claim 2, **characterized in that** in each case two circumferentially adjacent pairs of sipes from the two rows of sipes are connected to one another by connecting channels (15), which are of the same width as the sipes (12') and have a smaller depth than the sipes (12').

4. Pneumatic vehicle tyre according to Claim 3, **characterized in that** the connecting channels (15) have a depth of several tenths of a millimetre to 1 mm.

5. Pneumatic vehicle tyre according to Claim 1, **characterized in that** the sipes (2, 2') arranged in pairs cross through the profile strip.

6. Pneumatic vehicle tyre according to Claim 1 or 5, **characterized in that** the sipes (2') arranged in pairs that are adjacent to the profile strip flanks (1a) have sipe portions (2'a) that are offset with respect to one another in the circumferential direction and are connected by way of central sipe portions (2'b), which run at a greater acute angle in relation to the transverse direction of the tread rubber than the sipe portions (2'a) at the profile strip flanks (1a).

7. Pneumatic vehicle tyre according to Claim 6, **characterized in that** the central sipe portions (2'b) have a depth that corresponds to the depth of the sipe portions (2'a) adjoining them or is smaller by up to 2 mm than the depth of the sipe portions (2'a) adjoining them.

8. Pneumatic vehicle tyre according to one of Claims 1 to 7, **characterized in that** the sipes (2, 2', 2", 12, 12', 12") arranged in pairs run at an acute angle of between 3° and 10° in relation to the transverse direction of the tread rubber.

9. Pneumatic vehicle tyre according to one of Claims 1 to 8, **characterized in that** the sipes (2, 2', 2", 12, 12', 12") arranged in pairs have a depth that corresponds to the profile depth or is smaller by up to 5 mm, in particular by up to 3 mm, than the profile depth.

10. Pneumatic vehicle tyre according to one of Claims 1 to 9, **characterized in that**, between sipes (2, 2', 2", 12, 12', 12") arranged in pairs, the profile strip (1) is provided at least on one side with indentations or pockets (4).

11. Pneumatic vehicle tyre according to Claim 10, **characterized in that** the pockets (4) protrude by between 1 mm and 3 mm into the profile strip (1, 11, 11') and extend in the radial direction at most as far as the profile depth.

## Revendications

1. Pneumatique de véhicule comprenant une bande de roulement avec des bandes profilées (1, 11, 11', 11'') s'étendant circonférentiellement dans la direction périphérique et exemptes de rainures transversales, qui présentent, au lieu de rainures transversales, des entailles (2, 2', 2 " , 12, 12', 12") parallèles les unes aux autres et s'étendant essentiellement dans la direction transversale de la bande de roulement, avec une largeur de 0,4 mm à 0,8 mm, des entailles (2, 2', 2", 12, 12', 12") étant prévues, dont la distance normale est de 5 mm à 10 mm,
**caractérisé en ce que**
les entailles (2, 2', 2", 12, 12', 12") dont la distance normale est de 5 mm à 10 mm sont disposées par paires d'entailles, la distance mutuelle (a) des paires d'entailles, aux extrémités des entailles (2, 2', 2", 12, 12', 12"), déterminée en tant que distance des entailles tournées l'une vers l'autre (2, 2', 2", 12, 12', 12") des deux paires d'entailles, étant comprise entre 25 mm et 35 mm.

2. Pneumatique de véhicule selon la revendication 1, **caractérisé en ce que** les entailles disposées par paires (2", 12') sont disposées dans la bande profilée (1, 11') en deux rangées d'entailles qui sont de préférence décalées dans une direction périphérique les unes par rapport aux autres.

3. Pneumatique de véhicule selon la revendication 2, **caractérisé en ce qu'**à chaque fois deux paires d'entailles adjacentes dans la direction périphérique, provenant des deux rangées d'entailles, sont connectées l'une à l'autre par des gorges de connexion (15) qui ont la même largeur que les entailles (12') et présentent une plus faible profondeur que les entailles (12').

4. Pneumatique de véhicule selon la revendication 3, **caractérisé en ce que** les gorges de connexion (15) présentent une profondeur de quelques dixièmes de millimètre jusqu'à un millimètre.

5. Pneumatique de véhicule selon la revendication 1, **caractérisé en ce que** les entailles disposées par paires (2, 2') traversent la bande profilée (1).

6. Pneumatique de véhicule selon la revendication 1 ou 5, **caractérisé en ce que** les entailles disposées par paires (2'), de manière adjacente aux flancs de bande profilée (la), présentent des portions d'entailles (2'a) qui sont décalées les unes par rapport aux autres dans la direction périphérique et qui sont connectées par le biais de portions d'entailles centrales (2'b) qui s'étendent suivant un plus grand angle aigu par rapport à la direction transversale de la bande de roulement que les portions d'entailles (2'a) au niveau des flancs de bande profilée (la).

7. Pneumatique de véhicule selon la revendication 6, **caractérisé en ce que** les portions d'entailles centrales (2'b) présentent une profondeur qui correspond à la profondeur des portions d'entailles (2'a) s'y raccordant ou est inférieure de jusqu'à 2 mm à la profondeur des portions d'entailles (2'a) s'y raccordant.

8. Pneumatique de véhicule selon l'une quelconque des revendications 1 à 7, **caractérisé en ce que** les entailles disposées par paires (2, 2', 2", 12, 12', 12") s'étendent suivant un angle aigu compris entre 3° et 10° par rapport à la direction transversale de la bande de roulement.

9. Pneumatique de véhicule selon l'une quelconque des revendications 1 à 8, **caractérisé en ce que** les entailles disposées par paires (2, 2', 2", 12, 12', 12") présentent une profondeur qui correspond à la profondeur du profilé ou qui est inférieure à la profondeur du profilé de jusqu'à 5 mm, en particulier de jusqu'à 3 mm.

10. Pneumatique de véhicule selon l'une quelconque des revendications 1 à 9, **caractérisé en ce que** la bande profilée (1) est pourvue au moins d'un côté de renfoncements ou de cavités (4) entre des entailles disposées par paires (2, 2', 2", 12, 12', 12").

11. Pneumatique de véhicule selon la revendication 10, **caractérisé en ce que** les cavités (4) pénètrent sur entre 1 mm et 3 mm dans la bande profilée (1, 11, 11') et s'étendent dans la direction radiale au maximum jusqu'à la profondeur du profilé.
